# EUROPEAN PATENT SPECIFICATION

(11) **EP 2 346 674 B1**
(45) Date of publication and mention of the grant of the patent: **05.12.2018**
(21) Application number: 09825181.2
(22) Date of filing: 14.10.2009
(51) Int. Cl.: B29C 70/44

(54) **REUSABLE INFUSION BAG**
WIEDERVERWENDBARER INFUSIONSBEUTEL
SAC D'INFUSION RÉUTILISABLE

(30) Priority: 05.11.2008 US 264998
(43) Date of publication of application: 27.07.2011
(73) Proprietor: Spirit AeroSystems, Inc., Wichita, KS 67210 (US)
(72) Inventor: ROSS, William, Tod, Cheney KS 67025 (US); BUXMAN, Jeffery, Max, Valley Center KS 67147 (US)
(74) Representative: Uexküll & Stolberg
(86) International application number: PCT/US2009/060595
(87) International publication number: WO 2010/053666

(56) References cited:
- EP-A1- 0 525 263
- EP-A1- 1 413 421
- WO-A1-99/04964
- KR-A- 20060 126 565
- US-A- 5 052 906
- US-A- 5 316 462
- US-A- 5 439 635
- US-A- 5 464 337
- US-A- 5 716 488
- US-A1- 2002 022 422
- US-A1- 2002 155 186
- US-A1- 2003 211 194
- US-A1- 2004 089 984
- US-A1- 2005 194 716
- US-A1- 2006 068 170
- US-A1- 2008 083 493
- US-A1- 2008 182 054
- US-B1- 6 406 659

## Description

### BACKGROUND

### 1. FIELD

The present invention relates to aircraft components. More particularly, the present invention relates to vacuum assisted resin transfer molding with a reusable vacuum bag.

### 2. RELATED ART

Vacuum assisted resin transfer molding (VARTM) is a composite manufacturing process in which dry fibers of composite material are laid on a tool beneath a nylon vacuum bag and vacuum sealed while liquid resin is drawn through the composite material with a vacuum pump. Traditionally, a flow media or resin distribution media made of a nylon, plastic, or metal and having a high permeability is placed over the composite material to allow resin to flow over it and subsequently be evenly dispersed throughout the composite material. Additionally, a breather cloth made of fiberglass or peel-ply may be placed beneath the nylon vacuum bag to help pull resin through the material and allow air to be evacuated from between the nylon vacuum bag and the tool. The nylon vacuum bag may then be placed over the composite material, flow media, and breather cloth, and sealed to the tool with chromate vacuum bag tape. A vacuum inlet and a vacuum outlet may allow the liquid resin to be pulled through the composite material. Once the liquid resin is distributed throughout the composite material and the vacuum bag is compressed against the composite material by vacuum force, the vacuum pump may be removed, and the part may then be cured by heat to harden the composite part.

Some disadvantages to the VARTM method include the need to individually cut the flow media, breather cloth, and vacuum bag for placement over the composite material, particularly when manufacturing complex-shaped composite parts. This may be time consuming and error-prone. Additionally, with complex-shaped composite parts, the flow media may need to be heat-set or spliced into many pieces to allow the flow media to conform to the desired shape for resin distribution. And, because the flow media, breather cloth, and vacuum bag are separate parts laid together, they may unintentionally move or shift during the vacuum and curing process.

Another disadvantage to the traditional VARTM method is that the vacuum bag, flow media, and breather cloth are not reusable. As the liquid resin is dispersed throughout the composite part, it also permeates the vacuum bag, flow media, and breather cloth, so that during the curing process, these items are also hardened as a result. Therefore, even when manufacturing identical parts, a new vacuum bag, flow media, and breather cloth must be used in the production of each individual part.

Finally, in the traditional VARTM process, once the vacuum pump is removed, the vacuum bag tape often leaks or bleeds off vacuum, and the vacuum bag therefore loses vacuum integrity when the vacuum source is turned off or disconnected. This, in turn, may negatively impact the structural integrity of the resulting part.

Therefore an improved apparatus and method for forming composite parts through vacuum assisted resin transfer molding is desired.

WO 99/04964 A1 relates to large composite structures which are produced using a vacuum assisted resin transfer molding process. The structures incorporate cores, which may be hollow cells or foam blocks. A plurality of cores, each of which may be wrapped with a fiber material, is arranged in a layer on a mold with a fiber material arranged to form face skins. The assembly is sealed under a vacuum bag to a mold surface. One or more main feeder conduits are provided in communication with a resin distribution network of smaller channels which facilitates flow of uncured resin into and through the fiber material. The resin distribution network may comprise a network of grooves formed in the surfaces or the cores and/or rounded corners of the cores. The network of smaller channels may also be provided between the vacuum bag and the fiber material, either integrally in the vacuum bag or via a separate distribution medium. Resin, introduced under vacuum, travels relatively quickly through the main feeder channel(s) and the network of smaller channels. After penetrating the fiber material to reach the surface of the cores, the resin again travels relatively quickly along the cores via the grooves in the cores or the spaces provided by the rounded corners to penetrate the fiber material between the cores, if present, and between the cores and the mold.

US 5,439,635 A relates to a vacuum bag for forming of a fiber reinforced composite article, made of a curable elastomer, having molded in resin distribution means. Optional vacuum conduits are molded into the periphery of the bag, causing the bag to be adapted to any number of mold shapes. The bag contains a resin distribution conduit sealed into the vacuum bag. A multiplicity of cross channels are formed on the inner surface of the bag, covering most of the area under which the fiber lay up is placed within the mold. These cross channels can be formed from a pattern of multiple, variegated small dots or pentagons, which, under vacuum, leave a multiplicity of small crisscross channels running along the inner surface of the vacuum bag. This pattern of distribution channels covers most of the fiber lay up, except for a perimeter area which insures resin flow into rather than across the fiber lay up.

US 2005/194716 A1 relates to a flexible molding component used with a base mold which improves on existing methods of forming fiber reinforced composite parts. The molding component is formed of a flexible body structure having an interfacing surface and a perimeter region including a perimeter seal configured for sealing engagement with the base mold. Resin and vacuum distribution channels are formed in the interfacing surface to deliver resin to a fiber lay up disposed on the base mold and draw the resin across and through the lay up, respectively, to properly mix the resin/fiber combination which forms the desired part. Application of the vacuum causes the perimeter seal of the flexible body structure to sealingly engage with the base mold to enclose materials between the body structure and the mold, as well as causing the interfacing surface to draw against the resin/fiber combination and the mold to shape the combination into the desired part.

US 2002/155186 A1 relates to a process and apparatus for producing fiber reinforced resin structures using vacuum assisted resin transfer molding technology, wherein the apparatus and process employ a first fluid impervious flexible sheet containing therein a resin port; a fiber containing preform; a primary vacuum line; a resin channeling means; and a secondary vacuum line. The fluid impervious flexible sheet is placed over or around the fiber containing preform to form a chamber to which the primary vacuum line is connected. The resin channeling means is positioned on top of the fluid impervious flexible sheet, exterior to the chamber containing the preform in a fashion so as to form a pocket between or around the resin channeling means and said fluid impervious flexible sheet to which the secondary vacuum is applied.; Activation of the secondary vacuum causes formation of channels in the fluid impervious flexible sheet. These channels increase the speed and efficiency of resin impregnation of the fiber containing preform.

US 6,406,659 B1 relates to methods and apparatus of molding composite parts by liquid resin infusion. The invention involves the creation of temporary resin distribution channels on the surface of a preform to aid in the distribution of resin during infiltration. In general, these methods are improvements over the art because the molds are cheaper to make, the parts produced are of higher quality, minimal waste is produced and the time to infiltrate the preform is reduced.

US 5,316,462 A relates to an unitary vacuum bag for forming of a fiber reinforced composite article, made of a curable elastomer, having molded in resin distribution means formed to the specific article to be made. Optional vacuum conduits are molded into the periphery of the bag, causing the bag to be adapted to any number of mold shapes. The vacuum bag is constructed upon that mold which forms the base for the construction of the desired fiber reinforced composite article. The bag contains an open sided, resilient main distribution conduit running laterally along the long axes of the vacuum bag with branch conduits, depending upon the shape of the mold, to provide for long distance flow of resin to all parts of the composite article. A multiplicity of cross channels are formed on the inner surface of the bag, covering most of the area under which the fiber lay up is placed within the mold. These cross channels can be formed from a pattern of multiple, variegated small dots, pillars, cones, or pyramid shape structures, which, under vacuum, leave a multiplicity of small crisscross channels running along the inner surface of the vacuum bag. This pattern of distribution channels covers most of the fiber lay up, except for a perimeter area which insures resin flow into rather than across the fiber lay up.

EP 1 413 421 A1 relates to a resin impregnation unit which consists of a housing with a suction outlet for the resin beneath a metal grille with upper and lower surfaces supported by the housing. The resin impregnation unit consists of a housing with a suction outlet for the resin beneath a metal grille with upper and lower surfaces supported by the housing. The upper surface of the grille supports an assembly one or more stacked fibre layers under a sealed flexible cover with an inlet for the resin. The contact surface between the suction outlet and the lower surface of the grille is virtually identical to the projection surface formed by the layers of fibres. The upper surface of the grille is shaped to match the surface of the component being made by the resin impregnated fibres, with a separating film layer between the two. The suction outlet is connected to the housing by an elastomer joint.

EP 0 525 263 A1 relates to fibre reinforced molded resin composites which are vacuum formed by laying up the fibre reinforcement on the surface of a mold between a pair of resin distribution members which ensure even distribution of resin injected into the mold cavity via the injection port throughout the laid-up reinforcement. The resin distribution members also act as spacers to space the lay up a small distance from the mold surface and from the flexible cover sheet which covers the lay up and by means of which a vacuum may be applied to the cavity via the vacuum outlets. Resin permeable peel-off plies are preferably provided between the spacers and the fibre lay up.

US 2006/068170 A1 relates to tooling aids for applying pressure in laminating, and methods for their use. In one embodiment, a caul for applying pressure in laminating includes a base portion positioned between first and second corner portions. The base portion can have a curved shape when it is in a relaxed state, but it moves to a flatter shape when subjected to pressure during lamination. Movement of the base portion to the flatter shape causes the first and second corner portions to move outwardly and away from the base portion. In this manner, the caul can be used to compact laminating materials into corner regions of a corresponding female mold surface.

US 5,716,488 A relates to a vacuum bag assembly used in making laminated articles having layers of composite materials and thermosetting resins that are formed and adhesively bonded together. The assembly includes a forming tool on which the composite materials and the thermosetting resins may be positioned. The composite materials have edges well spaced from edges of the forming tool. A vacuum bag is positioned over the composite material and the forming tool. The vacuum bag includes a flexible mat, having an irregular surface contiguous with the composite materials. The flexible mat also has edges well spaced from the edges of the forming tool. The vacuum bag also has a continuous flexible suction channel having an inner arch-like surface and an outer arch-like surface positioned between the edges of the flexible mat and the edges of the forming tool. The suction channel is attached to the flexible mat by a flexible connecting flange. Further, the flexible connecting flange, the outer surface of said suction channel, the edges of the flexible mat and the forming tool define the walls of an airspace positioned in between the flexible mat and the suction channel. The airspace is in pneumatic communication with the irregular surface of the flexible mat.

US 5,052,906 A relates to an apparatus for the production of high strength fiber reinforced plastic structures via an improved vacuum assisted technique. A fluid impervious outer sheet is marginally sealed upon a mold to provide an enclosure, or chamber, in which a fiber lay up can be placed. The fluid impervious outer sheet is provided with a vacuum outlet, and the mold is provided with a resin inlet. Primary distribution media are provided one located on one side of the fiber lay up and the other on the opposite side of the fiber lay up. Each is of character which facilitates on application of a vacuum the ready, continuous flow of resin via the resin inlet into the chamber to the marginal edges of said resin distribution medium and flow through of the resin through the fiber lay up.

US 2004/089984 A1 relates to a method of resin transfer molding which uses an open base mold filled with fiberglass material and a soft tool sealed over the base mold. A vacuum is applied to a vacuum chamber that surrounds the mold and communicates with the fiberglass material through vacuum conduits. Resin is injected into the closed mold and is drawn through the fiberglass material to the edge of the mold with the assistance of the vacuum. The soft tool is preferably a flexible sheet having an edge seal to connect to the base mold and a vacuum channel with a vacuum port that surrounds the mold. The injection head releasably connects to the soft tool and preferably uses a solenoid actuated injector to supply resin to the mold. The injection head can include a self sealing device to seal the injection port and a self cleaning mechanism for flushing resin from the interior chamber of the head.

US 5,464,337 A relates to a resin transfer molding system including a sealable chamber having opposing flexible diaphragms forming an outer reconfigurable tooling surface and an inner surface surrounding a workpiece including fibrous reinforcing material to be impregnated and formed over a mold surface. There are means for impregnating the fibrous reinforcing material and means for compressing the diaphragms about the fibrous reinforcing material and for urging the compressed diaphragms and the fibrous reinforcing material contained therein over the mold surface to conform the compressed diaphragms and the fibrous reinforcing material to the contours of the mold surface.

### SUMMARY

The present invention provides a reusable apparatus for forming a composite part through vacuum assisted resin transfer molding (VARTM) in combination with a tool as defined in claim 1 as well as a use of a sheet of rubber in combination with a tool as defined in claim 10. The reusable apparatus may be used to vacuum seal a curable material, such as composite material, against a tool and disperse a permeating substance, such as liquid resin, throughout the curable material.

The reusable apparatus may comprise a sheet of material made of rubber or a rubber-like substance and at least one sealing apparatus for sealing the sheet of material to the tool. The sheet of material may comprise a peripheral edge, a first side facing away from the curable material, and a second side facing the curable material and having a plurality of surface deviations. The surface deviations may comprise a first flow path area, a trough located to one side of the first flow path, a dam partially surrounding the first flow path area and the trough, and a second flow path area proximate the peripheral edge of the sheet of material.

The first flow path area may provide a plurality of flow paths for evenly disbursing the permeating substance throughout the curable material as the permeating substance flows from the trough to an opening of the dam at an opposite side of the first flow path area from the trough. The sheet of material may be placed over the curable material and the tool so that a permeating substance inlet of the tool is positioned proximate the trough, and the first flow path area is positioned between the permeating substance inlet and a permeating substance outlet of the tool. A vacuum pump may be attached to the permeating substance outlet to suction the permeating substance in through the permeating substance inlet and back out through the permeating substance outlet.

The sealing apparatus may comprise a first sealing apparatus and a second sealing apparatus, with the first sealing apparatus outward of the second flow path area and the second sealing apparatus inward of the second flow path area. Air may be evacuated through a sealing outlet of the tool from between the first and the second sealing apparatuses, thereby compressing the second flow path area toward the tool. The second flow path area may remain under continuous vacuum suction, provided through the sealing outlet, throughout the VARTM process and curing of the curable material.

A method for forming a composite part with the reusable apparatus may comprise the steps of placing the curable material on the tool and then placing the sheet of material over the curable material with the second side of the sheet of material facing the curable material. Next, the second side of the sheet of material proximate the peripheral edge may be sealed to the tool and the second flow path area may remain under continuous vacuum suction to maintain an airtight seal. Air may also be evacuated from between the sheet of material and the tool through the permeating substance outlet by vacuum suction. This vacuum suction may subsequently pull the permeating substance through the permeating substance inlet, into the trough. Then, from the trough, the permeating substance may flow through the first flow path area, allowing some of the permeating substance to permeate the curable material. Any excess permeating substance may then be pulled out through the permeating substance outlet. Finally, the permeating substance outlet and the permeating substance inlet may be closed off and the curable material may be cured under heat as the sealing outlet continues to provide vacuum suction, airtight sealing between the sheet of material and the tool around the curable material.

These and other important aspects of the present invention are described more fully in the detailed description below.

### BRIEF DESCRIPTION OF THE DRAWINGS

Embodiments of the present invention are described in detail below with reference to the attached drawing figures, wherein:
FIG. 1 is an exploded, cross-sectional, side elevation view of a reusable apparatus placed over a curable material and a tool in accordance with an embodiment of the present invention;
FIG. 2 is a perspective view of the tool of Fig. 1;
FIG. 3 is a top plan view of the reusable apparatus and the tool of Fig. 1; and
FIG. 4 is a flow chart illustrating method steps for using the reusable apparatus of Fig. 1.

The drawing figure does not limit the present invention to the specific embodiments disclosed and described herein. The drawing is not necessarily to scale, emphasis instead being placed upon clearly illustrating the principles of the invention.

### DETAILED DESCRIPTION

The following detailed description of the invention references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the present invention. The following detailed description is, therefore, not to be taken in a limiting sense. The scope of the present invention is defined only by the appended claims.

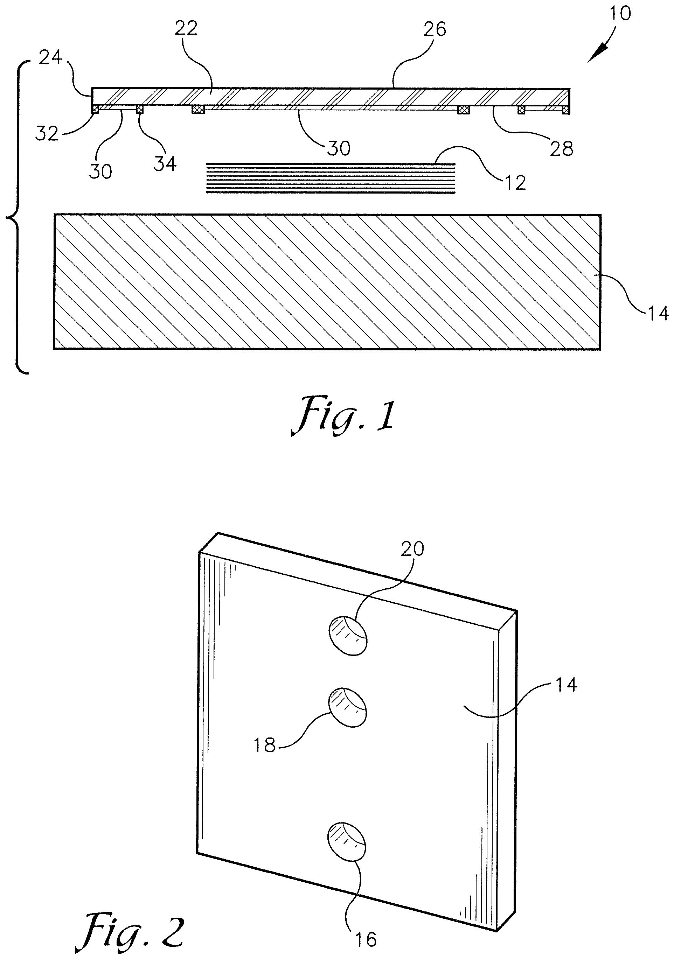

As illustrated in Figs. 1-4, embodiments of the present invention provide a reusable apparatus 10 and method 200 for forming a composite part through vacuum assisted resin transfer molding (VARTM). The reusable apparatus 10 may be configured to vacuum seal a curable material 12 against a tool 14 and disperse a permeating substance (not shown) through the curable material 12. The curable material 12 may be any type of permeable material that may be hardened through curing, such as composite material or dry fibers of a composite material. The permeating substance may include liquid resin or other flowable substances. The tool 14 may have a plurality of inlets 16 and outlets 18,20, as illustrated in Fig. 2, for transferring air and/or the permeating substance into and out of an area between the reusable apparatus 10 and the tool 14. Specifically, the tool 14 may comprise a permeating substance inlet 16, a permeating substance outlet 18, and a sealing outlet 20, as described herein.

The reusable apparatus 10 may comprise a sheet of material 22 having a peripheral edge 24, a first side 26 facing away from the curable material 12, and a second side 28 adjacent to and facing the curable material 12. The second side may comprise a plurality of surface deviations 30, described in more detail below. The second side 28 of the sheet of material 22 proximate the peripheral edge 24 may be sealed to the tool 14 by at least one sealing apparatus 32,34.

The sheet of material 22 may be formed of a flexible material that is substantially resistant to bonding with various types of resin, even when subjected to high amounts of pressure and/or heat, such as during a composite curing process. In one embodiment, the sheet of material 22 may be formed of any flexible and durable rubber or rubber-like material, such as silicone. The rubber and/or rubber-like material may be moldable in sheet and/or spray form.

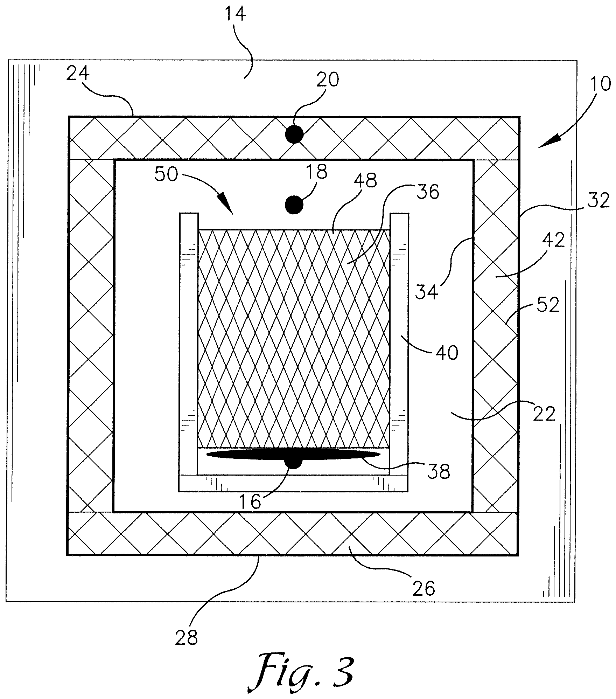

The sheet of material 22 may be cut or otherwise formed to conform to any desired shape such as the shape of an aircraft component or a composite part. For example, the sheet of material 22 may be formed with four sides so as to be placed over a curable material having four sides and resting against a substantially flat surface of the tool 14, as illustrated in Fig. 3. Or, for example, the sheet of material may be wrapped around curable material on a mandrel (not shown).

Note that Fig. 3 illustrates a schematic top view of the reusable apparatus 10 placed over the tool 14 in order to illustrate where the permeating substance inlet 16, the permeating substance outlet 18, and the sealing outlet 20 of the tool 14 may be positioned in reference to reusable apparatus 10. Fig. 3 illustrates the sheet of material 22 as being substantially transparent such that the plurality of surface deviations 30 on the second side 28 of the sheet of material 22 may be viewed from the first side 26. However, the sheet of material 22 may be transparent, opaque, or any combination thereof without departing from the scope of the invention.

The surface deviations 30 assist in the flow of air and/or the permeating substance between the sheet of material 22 and the tool 14. The surface deviations 30 may be formed by embossing various shapes into the sheet of material 22. Alternatively, the sheet of material 22 may be formed in a mold (not shown) to comprise various surface deviations. The surface deviations 30 may comprise a first flow path area 36, a trough 38, a dam 40, and a second flow path area 42, as illustrated in Fig. 3.

The first flow path area 36 may be configured for directing a flow of the permeating substance evenly throughout the curable material 12 and may comprise a plurality of flow path protrusions 48. For example, the flow path protrusions 48 may include an embossed or molded crisscross pattern, as illustrated in Fig. 3, or a plurality of staggered circular columns protruding from the second side of the sheet of material 22. The flow path protrusions 48 may comprise any surface deviations arranged in any pattern sufficient to provide a plurality of flow paths substantially evenly dispersed over the curable material 12. The first flow path area 36 may be of any shape and dimensions, but preferably matches the shape and the area dimensions of the curable material 12.

The trough 38 may be an elongated groove embossed or molded into the second side 28 of the sheet of material 22 into which the permeating substance may be dispersed before passing through the first flow path area 36. Alternatively, the trough 38 may be an elongated highly permeable area into which the permeating substance may be dispersed. The trough 38 may be located to one side of the first flow path area 36 and may extend along a width of the first flow path area 36 and/or the curable material 12 for creating an evenly distributed flow across the width of the curable material 12.

The dam 40 may be a wall-like protrusion extending out of the second side 28 of the sheet of material 22. The dam 40 at least partially surrounds the trough 38 and the first flow path area 36. The dam 40 may be molded or embossed into the sheet of material 22 and may blockade the permeating material from flowing in an undesired direction. The dam 40 may include a number of walls or one substantially continuous wall that surrounds the trough 38 on a side of the trough 38 opposite of the first flow path area 36 and a portion of the first flow path area 36. However, in various embodiments of the invention, the dam 40 may not form a completely continuous boundary around the first flow path area 36, but rather may have an opening 50 proximate a side of the first flow path area 36 opposite the trough 38 such that the permeating substance may exit the first flow path area 36 through the opening 50.

The second flow path area 42 may be positioned outside of the dam 40 and proximate the peripheral edge 24 of the sheet of material 22. The second flow path area 42 may comprise a plurality of vacuum path protrusions 52. For example, the vacuum path protrusions 52 may include an embossed or molded crisscross pattern or a plurality of staggered circular columns protruding from the second side 28 of the sheet of material 22 proximate the peripheral edge 24 of the sheet of material 22. The vacuum path protrusions 52 may comprise any surface deviations arranged in any pattern sufficient to provide a plurality of flow paths substantially evenly dispersed throughout the entire second flow path area 42 for use in sealing the sheet of material 12 to the tool 14.

The sealing apparatus 32,34 may be any device or material for creating an airtight seal between the sheet of material 22 and the tool 14. For example, the sealing apparatus 32,34 may be sealing tape. Alternatively, the sealing apparatus 32,34 may be a rubber or silicone sealing device as disclosed in co-pending U.S. Application No. 12/264,973. One embodiment disclosed in U.S. Application No. 12/264,973 is a rubber or silicone sealing device having a substantially crescent-shaped cross-section for creating a suction-cup-like seal with the tool 14 when forced downward towards the tool 14.

The sealing apparatus 32,34 may be attached to or integral with the second side 28 of the sheet of material 22. An exemplary embodiment of the sealing apparatuses 32,34 is proximate to the peripheral edge 24 and forms a complete boundary around the first flow path area 36, the trough 38, and the dam 40. In various embodiments of the invention, the sealing apparatus 32,34 may comprise a first sealing apparatus 32 and a second sealing apparatus 34, with the first sealing apparatus 32 located outward of and substantially adjacent to the second flow path area 42, and the second sealing apparatus 34 located inward of and substantially adjacent to the second flow path area 42.

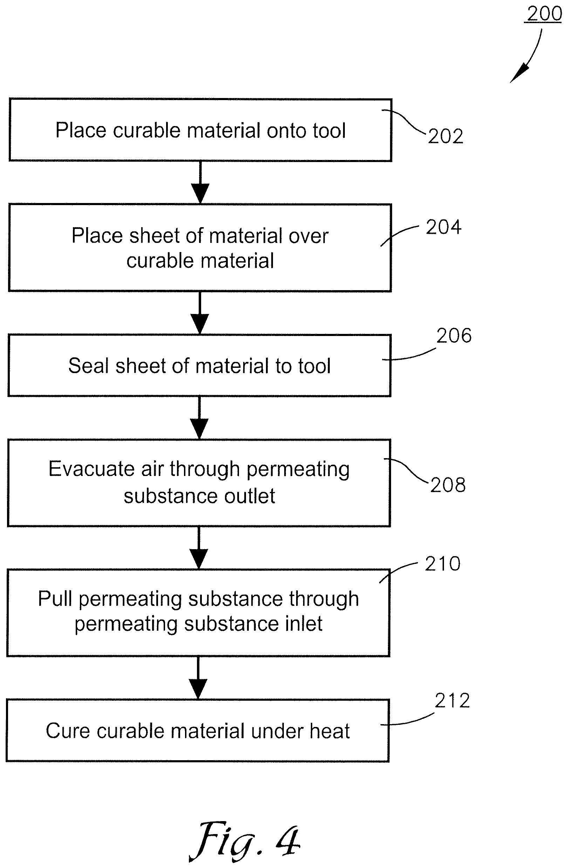

A method 200 for using the reusable apparatus 10, such as in the forming of a composite part, is shown in Fig. 4. Note that steps of the method 200 may be performed in various orders and/or with steps added or omitted without departing from the scope of the invention. The method 200 may first comprise placing the curable material 12 onto the tool 14, as depicted in step 202. Next, the sheet of material 22 may be placed over the curable material 12, as depicted in step 204. The sheet of material 22 may have an area greater than the curable material 12, such that the second side 28 of the sheet of material 22 proximate the peripheral edge 24 may be sealed to the tool 14.

As illustrated in Fig. 3, the sheet of material 22 may be placed on the tool 14 such that the trough 38 may be positioned proximate the permeating substance inlet 16 of the tool 14. In this position, the permeating substance may flow through the permeating substance inlet 16 into the trough 38, subsequently spread throughout the trough 38, and then flow out from the trough 38 evenly throughout a width of the first flow path area 36. The second periphery edge 46 of the first flow path area 36 and/or the opening 50 of the dam 40 may be positioned proximate the permeating substance outlet 18 of the tool 14. A vacuum pump (not shown) may be connected via the permeating substance outlet 18 to suction air and/or at least a portion of the permeating substance out from between the sheet of material 22 and the tool 14. So, the permeating substance may be pulled in through the permeating substance inlet 16, into the trough 38, through the first flow path area 36, and then out through permeating substance outlet 18 by the vacuum pump.

The first and second sealing apparatuses 32,34 may be positioned such that the sealing outlet 20 of the tool 14 may be located between the first and second sealing apparatuses 32,34 to maintain vacuum suction of the sheet of material 22 against the tool 14. Because of the configuration of the flow paths between the vacuum path protrusions 52, the second flow path area 42 may be uniformly compressed against the tool 14 between the first and second sealing apparatuses 32,34 when air is evacuated through the sealing outlet 20.

Once the sheet of material 22 is properly aligned with the tool 14, the method 200 may comprise sealing the second side 28 of the sheet of material 22 proximate the peripheral edge 24 of the sheet of material 22 to the tool 14 using the sealing apparatus 32,34, as depicted in step 206. For example, the first and second sealing apparatuses 32,34 attached to or integral to the sheet of material 22 may be placed against the tool 14 with the sealing outlet 20 of the tool 14 located between the first and second sealing apparatuses 32,34. Then a vacuum force may be applied to suction air out through the sealing outlet 20, thereby compressing the first and second sealing apparatuses 32,34 and the second flow path area 42 substantially against the tool 14. When the first and second sealing apparatuses 32,34 are compressed against the tool 14, they may form an airtight seal around the curable material 12 between the sheet of material 22 and the tool 14.

Additionally, as depicted in step 208, the method 200 may also comprise evacuating air from between the sheet of material 22 and the tool 14 through the permeating substance outlet 18. As discussed above, this may be achieved by attaching a vacuum pump to the permeating substance outlet 18. As air is pumped out or otherwise evacuated from between the sheet of material 22 and the tool 14, the permeating substance may be simultaneously pulled through the at least one vacuum pump inlet 16 and through the first flow path area 36 and the curable material 12. Then at least a portion of the permeating substance may flow out through the permeating substance outlet 18, as depicted in step 210. However, as the permeating substance flows through the curable material 12, at least a portion of the permeating substance may permeate the curable material 12 and will therefore not flow out through the permeating substance outlet 18.

Once the permeating substance has been pulled through the first flow path area 36, the permeating substance inlet 16 and permeating substance outlet 18 may each be covered, sealed, or substantially closed off such that neither air nor the permeating substance may pass through the permeating substance outlet 18 and the permeating substance inlet 16. However, the sealing outlet 20 may continue to be connected to a vacuum pump or any other apparatus for applying vacuum suction to the second flow path area 42 of the sheet of material 22. Then, as depicted in step 212, the curable material 12 may be cured under heat. By applying vacuum suction via the sealing outlet 20 throughout curing of the curable material 12, air may be prevented from leaking in between the sheet of material 22 and the tool 14.

Once the curable material 12 has been cured, the sheet of material 22 may be removed. The sheet of material 22, particularly when made of rubber or silicone, may be reused, because unlike prior art vacuum bags, the sheet of material 22 may be self-releasing such that the permeating substance will not bond to the sheet of material 22. Therefore the curable material 12 may be hardened while the sheet of material 22 remains flexible, allowing it to be reused. Additionally, if either of the first and second sealing apparatuses 32,34 are composed of the same material as the sheet of material 22, such as rubber or silicone, then they may also be reused.

Although the invention has been described with reference to the embodiments illustrated in the attached drawings, it is noted that equivalents may be employed and substitutions made herein without departing from the scope of the invention as recited in the claims. For example, the reusable apparatus 10 may comprise one or both of the sealing apparatuses 32,34 and the sheet of material 22, or the reusable apparatus 10 may comprise the sheet of material 22 only, and other non-reusable sealing apparatuses may alternatively be used to seal the sheet of material 22 to the tool 14.

Having thus described an embodiment of the invention, what is claimed as new and desired to be protected by Letters Patent includes the following:

## Claims

1. A reusable apparatus (10) in combination with a tool (14) for vacuum sealing a curable material (12) against the tool (14), and for dispersing a permeating substance through the curable material, when the reusable apparatus (10) is placed over the curable material and the tool (14),
the tool (14) has a permeating substance inlet (16) and a permeating substance outlet (18), and the reusable apparatus (10) comprising:
a first side (26) facing away from the curable material;
a second side (28) adjacent to and facing the curable material;
a peripheral edge (24) extending between the first and second sides; and
a plurality of surface deviations (30) formed on the second side (28) and configured for directing a flow of the permeating substance evenly throughout the curable material (12),
wherein the surface deviations (30) comprise a first flow path area (36) having a plurality of flow path protrusions configured to provide a plurality of flow paths for evenly distributing the permeating substance throughout the curable material, and an elongated trough (38) substantially extending a width of the curable material and located to one side of the first flow path area (36), and
wherein the elongated trough (38) is configured to be positioned proximate to the permeating substance inlet (16) of the tool (14) and configured such that the permeating substance flows through the permeating substance inlet (16) into the elongated trough (38), subsequently spreads throughout the elongated trough (38), and then flows out from the elongated trough (38) evenly throughout a width of the first flow path area (36).

2. The reusable apparatus (10) in combination with the tool (14) of claim 1, wherein the reusable apparatus is formed from a sheet (22) of rubber or rubber-like material on which the surface deviations (30) are formed.

3. The reusable apparatus (10) in combination with the tool (14) of claim 2, wherein the sheet (22) of material is at least one of rubber and silicone.

4. The reusable apparatus (10) in combination with the tool (14) of claim 2, wherein the surface deviations (30) further comprise a dam (40) protruding outward from the second side of the sheet of rubber material and at least partially surrounding the first flow path area (36) and the elongated trough (38).

5. The reusable apparatus (10) in combination with the tool (14) of claim 1, wherein the surface deviations (30) further comprise a second flow path area (42) having a plurality of vacuum path protrusions configured for compressing and sealing the second side of the sheet of material proximate the peripheral edge against the tool.

6. The reusable apparatus (10) in combination with the tool (14) of claim 5, further comprising:
a first sealing apparatus (32) outward of the second flow path area adjacent the peripheral edge; and
a second sealing apparatus (34) inward of the second flow path area,
wherein the first and second sealing apparatuses are configured to seal the second side of the reusable apparatus to the tool, forming a complete boundary around the curable material.

7. The reusable apparatus (10) in combination with the tool (14) of claim 6, wherein at least one of the first and second sealing apparatuses (32, 34) have a substantially crescent-shaped cross-section for creating a suction-cup-like seal with the tool when forced downward towards the tool.

8. The reusable apparatus (10) in combination with the tool (14) of claim 1, wherein the first flow path is positioned between a permeating substance inlet and a permeating substance outlet of the tool, and the elongated trough is positioned proximate the permeating substance inlet of the tool.

9. The reusable apparatus (10) in combination with the tool (14) of claim 6, wherein the first and second sealing apparatuses (32, 34) are configured to be positioned on either side of a sealing outlet of the tool and the sealing outlet is attached to a vacuum pump to maintain a vacuum suction of the first and second sealing apparatuses against the tool.

10. Use of a sheet (22) of rubber in combination with a tool (14), said sheet (22) being thin enough and flexible enough to substantially conform to a desired shape for vacuum sealing a curable material (12) against the tool (14) and dispersing a permeating substance through the curable material, when the sheet (22) is placed over the curable material (12) and the tool (14), wherein the tool (14) has a permeating substance inlet (16) and a permeating substance outlet (18), the sheet of rubber comprising:
a first side (26) facing away from the curable material;
a second side (28) adjacent to and facing the curable material;
a peripheral edge (24) extending between the first and second sides;
a first flow path area (36) integral with the second side (28) comprising surface deviations (30) configured to provide a plurality of flow paths for evenly distributing the permeating substance throughout the curable material;
an elongated trough (38) formed into the second side (28), substantially extending a width of the curable material, and located proximate the first flow path area (36), wherein the elongated trough (38) is configured to be positioned proximate to the permeating substance inlet of the tool and configured such that the permeating substance flows through the permeating substance inlet into the elongated trough, subsequently spreads throughout the elongated trough, and then flows out from the elongated trough evenly throughout a width of the first flow path area (36);
a dam (40) integral to and protruding outward from the second side and at least partially surrounding the first flow path area (36) and the elongated trough (38); and
a second flow path area (42) comprising surface deviations (30) configured to provide a plurality of flow paths for evenly suctioning the second side proximate the peripheral edge of the sheet of rubber material against the tool; and
a sealing apparatus (32, 34) for forming an air-tight seal between the second side and the tool, wherein the sealing apparatus comprises a continuous first sealing apparatus (32) outward of the second flow path area, and a continuous second sealing apparatus (34) inward of the second flow path area.

11. Use according to claim 10, wherein the sheet of rubber is configured such that when the elongated trough (38) is positioned proximate the permeating substance inlet of the tool, the first flow path is positioned between the permeating substance inlet and the permeating substance outlet of the tool, and the first and second sealing apparatuses are positioned such that a sealing outlet of the tool is located therebetween to maintain vacuum suction of the sheet of rubber against the tool.

12. Use according to claim 10, wherein the sheet of rubber material is comprised of silicone.

13. Use according to claim 10, wherein the dam (40) has an opening proximate a side of the first flow path area (36) opposite the elongated trough (38) such that the permeating substance can exit the first flow path area (36) through the opening.

14. Use according to claim 10, wherein the first and second sealing apparatuses (32, 34) are comprised of rubber, integral with the sheet of rubber material, and each have a substantially crescent-shaped cross-section for creating a suction-cup-like seal with the tool when forced downward towards the tool.

## Patentansprüche

1. Wiederverwendbare Vorrichtung (10) in Kombination mit einem Werkzeug (14), um ein härtbares Material (12) unter Vakuum gegen das Werkzeug (14) abzudichten und um eine durchdringende Substanz durch das härtbare Material zu dispergieren, wenn die wiederverwendbare Vorrichtung (10) über dem härtbaren Material und dem Werkzeug (14) platziert ist,
wobei das Werkzeug (14) einen Einlass (16) für die durchdringende Substanz und einen Auslass (18) für die durchdringende Substanz hat, und wobei die wiederverwendbare Vorrichtung (10) aufweist:
eine erste Seite (26), die dem härtbaren Material abgewandt ist;
eine zweite Seite (28), die zu dem härtbaren Material benachbart ist und die diesem zugewandt ist;
eine Umfangskante (24), die zwischen der ersten und der zweiten Seite verläuft; und
eine Mehrzahl von Oberflächenabweichungen (30), die an der zweiten Seite (28) gebildet und ausgestaltet sind, um eine Strömung der durchdringenden Substanz gleichmäßig durch das härtbare Material (12) zu leiten,
wobei die Oberflächenabweichungen (30) ein erstes Strömungspfadgebiet (36) mit einer Mehrzahl von Strömungspfaderhöhungen, die ausgestaltet sind, um eine Mehrzahl von Strömungspfaden zum gleichmäßigen Verteilen der durchdringenden Substanz durch das härtbare Material zur Verfügung zu stellen, und eine längliche Wanne (38) aufweisen, die sich im Wesentlichen entlang einer Weite des härtbaren Materials erstreckt und sich an einer Seite des ersten Strömungspfadgebiets (36) befindet, und
wobei die längliche Wanne (38) ausgestaltet ist, um sich in der Nähe des Einlasses (16) für die durchdringende Substanz des Werkzeugs (14) zu befinden, und so ausgestaltet ist, dass die durchdringende Substanz durch den Einlass (16) für die durchdringende Substanz in die längliche Wanne (38) strömt, sich anschließend durch die längliche Wanne (38) ausbreitet und dann gleichmäßig entlang einer Weite des ersten Strömungspfadgebiets (36) aus der länglichen Wanne (38) herausströmt.

2. Wiederverwendbare Vorrichtung (10) in Kombination mit dem Werkzeug (14) nach Anspruch 1, wobei die wiederverwendbare Vorrichtung aus einer Lage (22) aus Gummi oder aus gummiartigem Material gebildet ist, an der die Oberflächenabweichungen (30) ausgebildet sind.

3. Wiederverwendbare Vorrichtung (10) in Kombination mit dem Werkzeug (14) nach Anspruch 2, wobei die Lage (22) aus Material aus mindestens einem von Gummi und Silikon besteht.

4. Wiederverwendbare Vorrichtung (10) in Kombination mit dem Werkzeug (14) nach Anspruch 2, wobei die Oberflächenabweichungen (30) außerdem einen Damm (40) umfassen, der von der zweiten Seite der Lage aus Gummimaterial nach außen vorsteht und der das erste Strömungspfadgebiet (36) und die längliche Wanne (38) zumindest teilweise umgibt.

5. Wiederverwendbare Vorrichtung (10) in Kombination mit dem Werkzeug (14) nach Anspruch 1, wobei die Oberflächenabweichungen (30) außerdem ein zweites Strömungspfadgebiet (42) mit einer Mehrzahl von Vakuumpfaderhöhungen umfassen, die ausgestaltet sind, um die zweite Seite der Lage aus Material in der Nähe der Umfangskante gegen das Werkzeug zu drücken und abzudichten.

6. Wiederverwendbare Vorrichtung (10) in Kombination mit dem Werkzeug (14) nach Anspruch 5, außerdem mit:
einer ersten Abdichtungsvorrichtung (32) außerhalb des zweiten Strömungspfadgebiets benachbart zur Umfangskante; und
einer zweiten Abdichtungsvorrichtung (34) innerhalb des zweiten Strömungspfadgebiets,
wobei die erste und die zweite Abdichtungsvorrichtung ausgestaltet sind, um die zweite Seite der wiederverwendbaren Vorrichtung gegenüber dem Werkzeug abzudichten, wodurch eine vollständige Abgrenzung um das härtbare Material herum gebildet wird.

7. Wiederverwendbare Vorrichtung (10) in Kombination mit dem Werkzeug (14) nach Anspruch 6, wobei mindestens eine der ersten und der zweiten Abdichtungsvorrichtung (32, 34) bei Aufbringung von Druck nach unten in Richtung auf das Werkzeug einen im Wesentlichen halbmondförmigen Querschnitt hat, um eine Saugnapf-artige Abdichtung mit dem Werkzeug zu bewirken.

8. Wiederverwendbare Vorrichtung (10) in Kombination mit dem Werkzeug (14) nach Anspruch 1, wobei sich der erste Strömungspfad zwischen einem Einlass für die durchdringende Substanz und einem Auslass für die durchdringende Substanz des Werkzeugs befindet, und sich die längliche Wanne in der Nähe des Einlasses für die durchdringende Substanz des Werkzeugs befindet.

9. Wiederverwendbare Vorrichtung (10) in Kombination mit dem Werkzeug (14) nach Anspruch 6, wobei die erste und die zweite Abdichtungsvorrichtung (32, 34) ausgestaltet sind, um sich an beiden Seiten von einem Abdichtungsauslass des Werkzeugs zu befinden, und der Abdichtungsauslass an einer Vakuumpumpe angebracht ist, um eine Vakuumsaugwirkung der ersten und der zweiten Abdichtungsvorrichtung gegen das Werkzeug aufrechtzuerhalten.

10. Verwendung einer Lage (22) aus Gummi in Kombination mit einem Werkzeug (14), wobei die Lage (22) ausreichend dünn und ausreichend flexibel ist, um sich im Wesentlichen an eine gewünschte Form anzupassen, um ein härtbares Material (12) unter Vakuum gegen das Werkzeug (14) abzudichten und um eine durchdringende Substanz durch das härtbare Material zu dispergieren, wenn die Lage (22) über dem härtbaren Material (12) und dem Werkzeug (14) platziert ist, wobei das Werkzeug (14) einen Einlass (16) für die durchdringende Substanz und einen Auslass (18) für die durchdringende Substanz hat, wobei die Lage aus Gummi aufweist:
eine erste Seite (26), die dem härtbaren Material abgewandt ist;
eine zweite Seite (28), die zu dem härtbaren Material benachbart ist und die diesem zugewandt ist;
eine Umfangskante (24), die zwischen der ersten und der zweiten Seite verläuft;
ein erstes Strömungspfadgebiet (36) integriert mit der zweiten Seite (28), das Oberflächenabweichungen (30) aufweist, die ausgestaltet sind, um eine Mehrzahl von Strömungspfaden zur Verfügung zu stellen, um die durchdringende Substanz gleichmäßig durch das härtbare Material zu verteilen;
eine längliche Wanne (38), die in der zweiten Seite (28) gebildet ist, sich im Wesentlichen entlang einer Weite des härtbaren Materials erstreckt und sich in der Nähe des ersten Strömungspfadgebiets (36) befindet, wobei die längliche Wanne (38) ausgestaltet ist, um sich in der Nähe des Einlasses für die durchdringende Substanz des Werkzeugs zu befinden, und so ausgestaltet ist, dass die durchdringende Substanz durch den Einlass für die durchdringende Substanz in die längliche Wanne strömt, sich anschließend durch die längliche Wanne ausbreitet und dann gleichmäßig entlang einer Weite des ersten Strömungspfadgebiets (36) aus der länglichen Wanne herausströmt;
einen Damm (40), der mit der zweiten Seite integriert ist und von der zweiten Seite nach außen vorsteht und der das erste Strömungspfadgebiet (36) sowie die längliche Wanne (38) zumindest teilweise umgibt; und
ein zweites Strömungspfadgebiet (42), das Oberflächenabweichungen (30) aufweist, die ausgestaltet sind, um eine Mehrzahl von Strömungspfaden zur Verfügung zu stellen, um die zweite Seite in der Nähe der Umfangskante der Lage aus Gummimaterial gegen das Werkzeug zu saugen; und
eine Abdichtungsvorrichtung (32, 34), um eine luftdichte Abdichtung zwischen der zweiten Seite und dem Werkzeug zu bilden, wobei die Abdichtungsvorrichtung eine durchgehende erste Abdichtungsvorrichtung (32) außerhalb des zweiten Strömungspfadgebiets und eine durchgehende zweite Abdichtungsvorrichtung (34) innerhalb des zweiten Strömungspfadgebiets aufweist.

11. Verwendung nach Anspruch 10, wobei die Lage aus Gummi so ausgestaltet ist, dass dann, wenn sich die längliche Wanne (38) in der Nähe des Einlasses für die durchdringende Substanz des Werkzeugs befindet, sich der erste Strömungspfad zwischen dem Einlass für die durchdringende Substanz und dem Auslass für die durchdringende Substanz des Werkzeugs befindet, und die erste und die zweite Abdichtungsvorrichtung so positioniert sind, dass ein Abdichtungsauslass des Werkzeugs dazwischen angeordnet ist, um eine Vakuumsaugwirkung der Lage aus Gummi gegen das Werkzeug aufrechtzuerhalten.

12. Verwendung nach Anspruch 10, wobei die Lage aus Gummimaterial aus Silikon besteht.

13. Verwendung nach Anspruch 10, wobei der Damm (40) eine Öffnung in der Nähe einer Seite des ersten Strömungspfadgebiets (36) gegenüberliegend der länglichen Wanne (38) aufweist, so dass die durchdringende Substanz durch die Öffnung aus dem ersten Strömungspfadgebiet (36) austreten kann.

14. Verwendung nach Anspruch 10, wobei die erste und die zweite Abdichtungsvorrichtung (32, 34) aus Gummi bestehen, mit der Lage aus Gummimaterial integriert sind und jeweils einen im Wesentlichen halbmondförmigen Querschnitt haben, um bei Aufbringung von Druck nach unten in Richtung auf das Werkzeug eine Saugnapf-artige Abdichtung mit dem Werkzeug zu bewirken.

## Revendications

1. Dispositif réutilisable (10) associé à un outil (14) pour faire adhérer par aspiration une matière polymérisable (12) contre l'outil (14) et pour disperser une substance imprégnante à travers la matière polymérisable lorsque le dispositif réutilisable (10) est placé par-dessus la matière polymérisable et l'outil (14),
l'outil(14) ayant une entrée (16) pour substance imprégnante et une sortie (18) pour substance imprégnante, et le dispositif réutilisable (10), comportant :
une première face (26) orientée à l'opposé de la matière polymérisable;
une seconde face (28) adjacente à la matière polymérisable et en regard de cette dernière ;
un bord périphérique (24) s'étendant entre les première et seconde faces ; et
une pluralité de reliefs superficiels (30) formés sur la seconde face (28) et conçus pour diriger un écoulement de la substance imprégnante d'une façon homogène dans toute la matière polymérisable (12),
les reliefs superficiels (30) comprenant une première zone de trajet d'écoulement (36) ayant une pluralité de saillies de trajet d'écoulement conçues pour créer une pluralité de trajets d'écoulement afin de répartir la substance imprégnante d'une façon homogène dans toute la matière polymérisable, et une dépression allongée (38) s'étendant sensiblement sur une largeur de la matière polymérisable et située sur un côté de la première zone de trajet d'écoulement (36), et
la dépression allongée (38) étant conçue pour être placée tout près de l'entrée (16) de substance imprégnante de l'outil (14) et conçue de telle sorte que la substance imprégnante passe par l'entrée (16) de substance imprégnante pour pénétrer dans la dépression allongée (38), se répande dans toute la dépression allongée (38), puis sorte de la dépression allongée (38) d'une façon homogène sur toute une largeur de la première zone de trajet d'écoulement (36).

2. Dispositif réutilisable (10) associé à l'outil (14) selon la revendication 1, le dispositif réutilisable étant fait d'une feuille (22) de caoutchouc ou de matière caoutchouteuse sur laquelle sont formés les reliefs superficiels (30).

3. Dispositif réutilisable (10) associé à l'outil (14) selon la revendication 2, dans lequel la feuille (22) de matière est en caoutchouc et/ou en silicone.

4. Dispositif réutilisable (10) associé à l'outil (14) selon la revendication 2, dans lequel les reliefs superficiels (30) comprennent en outre un barrage (40) faisant saillie vers l'extérieur depuis la seconde face de la feuille de matière caoutchouteuse et entourant au moins partiellement la première zone de trajet d'écoulement (36) et la dépression allongée (38).

5. Dispositif réutilisable (10) associé à l'outil (14) selon la revendication 1, dans lequel les reliefs superficiels (30) comprennent en outre une seconde zone de trajet d'écoulement (42) ayant une pluralité de saillies de trajet sous vide conçues pour comprimer et faire adhérer la seconde face de la feuille de matière tout près du bord périphérique contre l'outil.

6. Dispositif réutilisable (10) associé à l'outil (14) selon la revendication 5, comportant en outre :
un premier dispositif de création d'adhérence (32) vers l'extérieur de la seconde zone de trajet d'écoulement au voisinage immédiat du bord périphérique ; et
un second dispositif de création d'adhérence (34) vers l'intérieur de la seconde zone de trajet d'écoulement,
les premier et second dispositifs de création d'adhérence étant conçus pour faire adhérer la seconde face du dispositif réutilisable sur l'outil, en formant une bordure complète autour de la matière polymérisable.

7. Dispositif réutilisable (10) associé à l'outil (14) selon la revendication 6, dans lequel au moins un des premier et second dispositifs de création d'adhérence (32, 34) a une section transversale sensiblement en forme de croissant pour créer une adhérence analogue à celle d'une ventouse avec l'outil quand ils sont poussés vers le bas en direction de l'outil.

8. Dispositif réutilisable (10) associé à l'outil (14) selon la revendication 1, dans lequel le premier trajet d'écoulement est placé entre une entrée de substance imprégnante et une sortie de substance imprégnante de l'outil, et la dépression allongée est placée tout près de l'entrée de substance imprégnante de l'outil.

9. Dispositif réutilisable (10) associé à l'outil (14) selon la revendication 6, dans lequel les premier et second dispositifs de création d'adhérence (32, 34) sont conçus pour être placés de part et d'autre d'une sortie pour adhérence de l'outil et la sortie pour adhérence est fixée à une pompe à vide afin de maintenir une aspiration des premier et second dispositifs de création d'adhérence contre l'outil.

10. Utilisation d'une feuille (22) de caoutchouc associée à un outil (14), ladite feuille (22) étant suffisamment mince et suffisamment souple pour sensiblement épouser une forme voulue pour l'adhérence par aspiration d'une matière polymérisable (12) contre l'outil (14) et disperser une matière imprégnante à travers la matière polymérisable, quand la feuille (22) est placée par-dessus la matière polymérisable (12) et l'outil (14), l'outil (14) ayant une entrée (16) de substance imprégnante et une sortie (18) de substance imprégnante, la feuille de caoutchouc comprenant :
une première face (26) orientée à l'opposé de la matière polymérisable ;
une seconde face (28) adjacente à la matière polymérisable et en regard de cette dernière ;
un bord périphérique (24) s'étendant entre les première et seconde faces ; et
une première zone de trajet d'écoulement (36) faisant corps avec la seconde face (28), comprenant des reliefs superficiels (30) conçus pour créer une pluralité de trajets d'écoulement afin de répartir la substance imprégnante d'une façon homogène dans toute la matière polymérisable,
une dépression allongée (38) formée dans la seconde face (28), s'étendant sensiblement sur une largeur de la matière polymérisable et située tout près de la première zone de trajet d'écoulement (36), la dépression allongée (38) étant conçue pour être placée tout près de l'entrée de substance imprégnante de l'outil et conçue de telle sorte que la substance imprégnante passe par l'entrée de substance imprégnante pour pénétrer dans la dépression allongée, puis se répande dans toute la dépression allongée, et ensuite sorte de la dépression allongée d'une façon homogène sur toute une largeur de la première zone de trajet d'écoulement (36) ;
un barrage (40) solidaire de la seconde face et faisant saillie vers l'extérieur cette dernière et entourant au moins partiellement la première zone de trajet d'écoulement (36) et la dépression allongée (38) ; et
une seconde zone de trajet d'écoulement (42) comprenant des reliefs superficiels (30) conçus pour créer une pluralité de saillies de trajet sous vide conçues pour aspirer d'une façon homogène la seconde face tout près du bord périphérique de la feuille de matière caoutchouteuse contre l'outil ; et
un dispositif d'application étanche (32, 34) pour former un joint étanche à l'air entre la seconde face et l'outil, le dispositif de création d'adhérence comprenant un premier dispositif de création d'adhérence continue (32) vers l'extérieur de la seconde zone de trajet d'écoulement, et un second dispositif de création d'adhérence continue (34) vers l'intérieur de la seconde zone de trajet d'écoulement

11. Utilisation selon la revendication 10, dans laquelle la feuille de caoutchouc est conçue de telle sorte que, lorsque la dépression allongée (38) est placée tout près de l'entrée de substance imprégnante de l'outil, le premier trajet d'écoulement soit placée entre l'entrée de substance imprégnante et la sortie de substance imprégnante de l'outil, et les premier et second dispositifs de création d'adhérence sont placés de telle sorte qu'une sortie pour adhérence de l'outil soit située entre ceux-ci afin de maintenir une aspiration de la feuille de caoutchouc contre l'outil.

12. Utilisation selon la revendication 10, dans laquelle la feuille de matière caoutchouteuse est composée de silicone.

13. Utilisation selon 1 revendication 10, dans laquelle le barrage (40) a une ouverture tout près d'un côté de la première zone de trajet d'écoulement (36) opposé à la dépression allongée (38) de telle sorte que la substance imprégnante puisse sortir de la première zone de trajet d'écoulement (36) par l'ouverture.

14. Utilisation selon la revendication 10, dans laquelle les premier et second dispositifs d'application étanche (32, 34) sont faits de caoutchouc, faisant corps avec la feuille de matière caoutchouteuse, et ont chacun une section transversale en forme de croissant pour créer une adhérence analogue à celle d'une ventouse avec l'outil quand ils sont poussés vers le bas en direction de l'outil.
